# EUROPÄISCHE PATENTANMELDUNG

(11) **EP 0 978 435 A2**
(43) Veröffentlichungstag der Anmeldung: **09.02.2000**
(21) Anmeldenummer: 99113746.4
(22) Anmeldetag: 14.07.1999
(51) Int. Cl.: B60T 13/66

(54) **Brems- und/oder Fahrwerkregelvorrichtung**

(30) Priorität: 05.08.1998 DE 19835352
(71) Anmelder: DaimlerChrysler AG, 70567 Stuttgart (DE)
(72) Erfinder: Freitag, Rainer, 73277 Owen (DE); Hartl, Mathias, 71394 Kernen (DE); Huber, Wilfried, 75395 Ostelsheim (DE); Müller, Armin, 75391 Gechingen (DE); Platte, Andreas, 73765 Neuhausen (DE); Tröster, Harry, Dr., 71732 Tamm (DE)

(57) **Zusammenfassung**

Eine Brems- und/oder Fahrwerkregelvorrichtung für Fahrzeuge, umfassend eine Fahrwerksteuereinrichtung (30), durch welche abhängig von der von einem Pedalsensor (15,25) erfaßten Bremspedalstellung Radbremsen (41a,41b,42a,42b) des Fahrzeugs betätigbar sind, ist dadurch gekennzeichnet, daß wenigstens zwei Bremskreise (10,20) vorgesehen sind, deren jeder einen redundanten Pedalsensor (15,25), wenigstens eine in Abhängigkeit vom Ausgangssignal der Fahrzeugsteuereinrichtung (30) ansteuerbare Steuereinrichtung (12,22;11a,11b,21a,21b) wenigstens einen von der Steuereinrichtung (12,22;11a,11b,21a,21b) ansteuerbaren Aktor (13,24;23,24) zur Betätigung einer Radbremse (41a,41b,42a,42b) und eine Energieversorgungseinrichtung (18,28,88) umfaßt.

## Beschreibung

Die Erfindung betrifft eine Brems- und/oder Fahrwerkregelvorrichtung nach dem Oberbegriff des Anspruchs 1.

Eine solche Bremsvorrichtung ist beispielsweise aus der DE 195 48 392 A1 bekannt. Bei dieser Bremsvorrichtung kommen elektrohydraulische oder elektromechanische Bremsen zum Einsatz.

Aus der DE 44 36 162 C1 ist eine Vorrichtung zur Regelung des Fahrzeugverhaltens im fahrdynamischen Grenzbereich bekannt, bei der beispielsweise die drei Freiheitsgrade des Fahrzeugs in der Ebene, d.h. die Längs-, Quer- und Giergeschwindigkeit um die Hochachse abhängig vom Fahrerwunsch und von dem Zustand der Fahrbahn durch Bremseingriffe beeinflußt werden.

Aus der DE 195 10 525 A1 ist ein Verfahren und eine Vorrichtung zur Steuerung bzw. Regelung einer Bremsanlage eines Fahrzeugs bekannt, bei dem die Bremspedalbetätigung durch wenigstens zwei, vorzugsweise diversitäre

Meßeinrichtungen erfaßt und aus dem Meßsignal der Bremswunsch des Fahrers ermittelt wird. Zur Fehlererkennung wird der Bremswunsch aus den wenigstens zwei Betätigungssignalen unabhängig voneinander ermittelt und weiterverarbeitet. Zur Fehlerlokalisierung ist eine dritte, die Bremspedalbetätigung erfassende Meßeinrichtung vorgesehen. Die Steuereinheit dieser Bremsvorrichtung umfaßt wenigstens zwei Mikrorechner, welche jeweils die Signale der beiden Meßeinrichtungen zur Erfassung des Bremswunsches des Fahrers verarbeiten, während das Signal der Überwachungsmeßeinrichtung lediglich einem Mikrorechner zugeführt wird. Die Mikrorechner steuern Stellelemente der Radbremsen an.

Aus der CH 167002 geht eine steuerbare hydraulische Bremseinrichtung für Motorfahrzeuge hervor mit einem Druckgehäuse, in welchem zwei voneinander unabhängige Druckräume mit zugehörigen, gemeinsam betätigbaren Druckkolben vorgesehen sind, deren einer zum Steuern der Vorderradbremsen, deren anderer dagegen zum Steuern der Hinterradbremsen dient, wobei bei einem Defektwerden der Vorderrrad- oder Hinterradbremsen die anderen Bremsen, bzw. die Hinterrad- oder Vorderradbremsen in ihrem Bremsvermögen unbeeinflußt bleiben.

Aus Sicherheitsgründen und zur Erfüllung nationaler und internationaler Vorschriften ist es bei elektrischen Bremssystemen erforderlich, eine mechanische/hydraulische Rückfallebene vorzusehen, die ein sicheres Abbremsen des Fahrzeugs in Notsituationen ermöglicht.

Derartige mechanische/hydraulische Rückfallebenen erfordern einen zusätzlichen technischen Aufwand, sie sind darüber hinaus in den wenigsten Fällen durch Steuereinrichtungen, wie zum Beispiel die zentrale Fahrwerksteuereinrichtung ansteuerbar.

Der Erfindung liegt nun die Aufgabe zugrunde, eine Brems- und/oder Fahrwerkregelvorrichtung der gattungsgemäßen Art dahingehend weiterzubilden, daß sie bei Erfüllung sämtlicher Sicherheitsvorschriften möglichst ohne zusätzliche mechanische/hydraulische Rückfallebene auskommt.

Die Erfindung wird bei einer Brems- und/oder Fahrwerkregelvorrichtung der eingangs beschriebenen Art erfindungsgemäß durch die Merkmale des Anspruchs 1 gelöst.

Das Vorsehen von zwei Bremskreisen mit jeweils einem eigenen Pedalsensor, einer eigenen Steuereinrichtung zur Ansteuerung der Aktoren und einer eigenen Energieversorgungseinrichtung hat den besonders großen Vorteil, daß bei dieser Anordnung auch bei Ausfall eines Bremskreises ein sicheres Abbremsen des Fahrzeugs gewährleistet ist. Eine derartige Brems- und/oder Fahrwerkregelvorrichtung erfüllt daher ohne zusätzliche mechanische/hydraulische Rückfallebene sämtliche gesetzlichen Anforderungen. Besonders vorteilhaft dabei ist, daß konventionelle Steuergeräte und insbesondere auch konventionelle Software für diese Steuergeräte verwendet werden können.

Vorteilhafterweise ist dabei vorgesehen, daß jeder Kreis eine Steuereinrichtung umfaßt, durch die zwei Aktoren ansteuerbar sind. Hierdurch sind durch einen Bremskreis auf an sich bekannte Weise zwei Fahrzeugbremsen zum Beispiel achsweise oder diagonal betätigbar.

Bei einer besonders vorteilhaften Ausführungsform ist dabei vorgesehen, daß die Steuereinrichtung und die ihr zugeordneten Aktoren Teil eines Hydraulikaggregats mit einer Pumpe, einem Speicher und ansteuerbaren Ventilen zur Betätigung der Radbremsen sind. Hierbei ist jedem der beiden Bremskreise ein eigenes Hydraulikaggregat zugeordnet, wodurch eine hydraulische Rückfallebene entfallen kann. Ganz besonders vorteilhaft hierbei ist es, daß die Achsen bei achsweiser Anordnung der Steuereinrichtungen zusammen mit den ihnen zugeordneten Hydraulikaggregaten vormontierbar sind und daß dabei nur kurze Leitungen von den Hydraulikaggregaten zu den Radbremsen erforderlich sind. Dies ermöglicht eine hohe Dynamik, eine gute Entlüftbarkeit der Bremse und einen Montagevorteil durch Entfall von Leitungslänge.

Darüber hinaus ist jedem Hydraulikaggregat ein eigener Bremsflüssigkeitskreislauf zugeordnet, wodurch ein gutes Ansaugverhalten auch bei tiefen Temperaturen, eine höhere Sicherheit und Verfügbarkeit, weniger Geräuschprobleme und der Einsatz von geringeren Mengen von Bremsflüssigkeit ermöglicht werden.

Bei einer anderen vorteilhaften Ausführungsform ist vorgesehen, daß jeder Bremskreis zwei Steuereinrichtungen umfaßt, durch die jeweils ein Aktor ansteuerbar ist.

Dabei ist vorzugsweise vorgesehen, daß der Aktor die Radbremse elektromotorisch betätigt.

Neben der Ausbildung einer Bremsfunktion kann ferner vorteilhafterweise eine von der Fahrwerksteuereinrichtung ansteuerbare elektrische Lenkung und/oder elektrische Federung vorgesehen sein, die von einer eigenen Energieversorgungseinrichtung mit Energie versorgt werden.

Vorzugsweise sind die Steuereinrichtungen mit der Fahrwerksteuereinrichtung über einen CAN-Datenbus verbunden.

Weitere Vorteile und Merkmale der Erfindung sind Gegenstand der nachfolgenden Beschreibung sowie der zeichnerischen Darstellung einiger Ausführungsbeispiele.

In der Zeichnung zeigen:
- Fig. 1: schematisch ein erstes Ausführungsbeispiel einer von der Erfindung Gebrauch machenden Brems- und/oder Fahrwerkregelvorrichtung;
- Fig. 2: schematisch ein zweites Ausführungsbeispiel einer von der Erfindung Gebrauch machenden Brems- und/oder Fahrwerkregelvorrichtung;
- Fig. 3: schematisch ein drittes Ausführungsbeispiel einer von der Erfindung Gebrauch machenden Brems- und/oder Fahrwerkregelvorrichtung;
- Fig. 4: ein Hydraulikaggregat einer in Fig. 3 dargestellten Brems- und/oder Regelvorrichtung im Detail und
- Fig. 5: schematisch ein viertes Ausführungsbeispiel einer von der Erfindung Gebrauch machenden Brems- und/oder Fahrwerkregelvorrichtung.

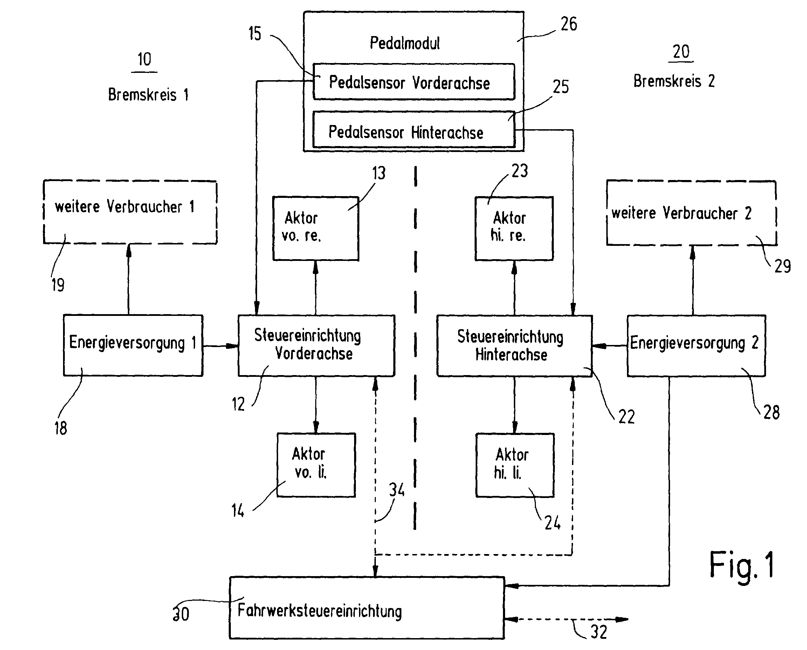

Ein Ausführungsbeispiel einer Brems- und Regelvorrichtung, dargestellt in Fig. 1, umfaßt eine Fahrwerksteuereinrichtung 30, welche beispielsweise ein an sich bekanntes elektronisches Stabilitätsprogramm (ESP) umfaßt. Die Fahrwerksteuereinrichtung 30 ist mit einem an sich bekannten CAN (Computer Area Network)-Datenbus 32 mit weiteren Fahrzeugeinrichtungen zum Austausch von Daten verbunden.

Die Brems- und/oder Fahrwerkregelvorrichtung umfaßt ferner zwei Bremskreise, einen ersten Bremskreis 10 und einen zweiten Bremskreis 20. Jeder der beiden Bremskreise 10 bzw. 20 umfaßt eine Steuereinrichtung 12, 22, die über einen weiteren CAN-Datenbus 34 mit der Fahrzeugsteuereinrichtung 30 verbunden ist.

Durch die Steuereinrichtungen 12 bzw. 22 sind jeweils diesen zugeordnete Aktoren 13, 14 bzw. 23, 24 in Abhängigkeit von jeweils zwei redundanten Pedalsensoren, z.B. Pedalwegsensoren oder andere die Pedalstellung erfassende Sensoren, die ihrerseits jedem der beiden Bremskreise 10 bzw. 20 zugeordnet sind, ansteuer- und betätigbar. Die beiden Pedalsensoren 15, 25 sind Teil eines Pedalmoduls 26. Wie in Fig. 1 ferner dargestellt ist, weist jeder der beiden Bremskreise 10 bzw. 20 eine eigene Energieversorgungseinrichtung 18 bzw. 28 auf, die auch weitere Verbraucher 19 bzw. 29 mit Energie versorgen kann. Die Aktoren selbst können beispielsweise elektrohydraulische oder elektrische Radbremselemente oder dergleichen sein.

Die beiden Bremskreise 10 bzw. 20 und deren Aktoren 13, 14 bzw. 23, 24 können beispielsweise achsweise oder diagonal angeordnet sein.

Durch die separate Anordnung der beiden Bremskreise 10 bzw. 20 kann bei der dargestellten elektrischen Bremseinrichtung eine mechanische/hydraulische Rückfallebene vollständig entfallen.

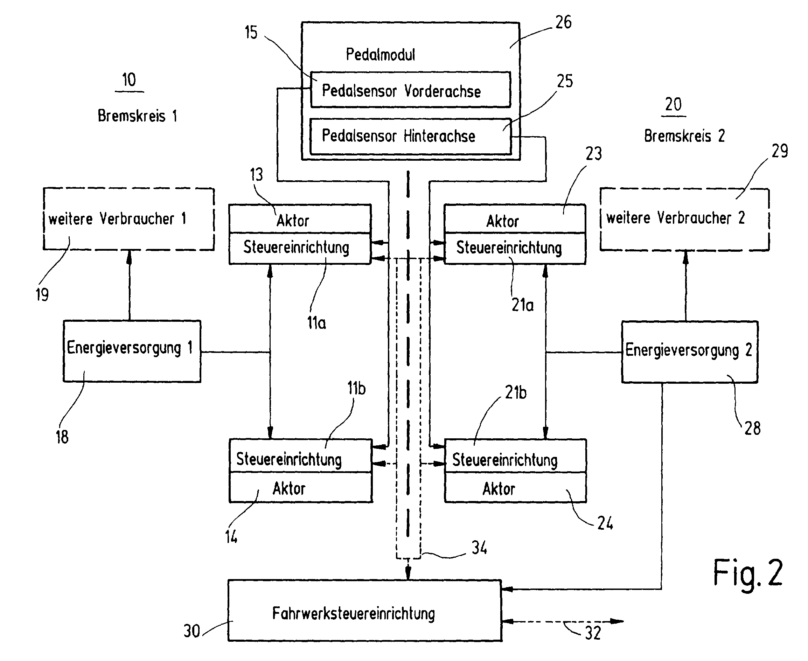

Bei einem zweiten Ausführungsbeispiel, dargestellt in Fig. 2, sind diejenigen Elemente, die mit denen des ersten identisch sind, mit denselben Bezugszeichen versehen, so daß bezüglich deren Beschreibung auf die Ausführungen zum ersten Ausführungsbeispiel vollinhaltlich Bezug genommen wird.

Im Gegensatz zum ersten Ausführungsbeispiel sind jedoch in jedem der beiden Bremskreise 10 bzw. 20 jeweils zwei Steuergeräte 11a, 11b bzw. 21a, 21b vorgesehen, die jeweils einem Aktor 13, 14 bzw. 23, 24 zugeordnet sind. Diese Anordnung ist beispielsweise bei elektromotorisch betriebenen Radbremsen vorgesehen. Bei Ausfall eines der Steuergeräte 11a, 11b bzw. 21a, 21b können die anderen Steuergeräte angesteuert durch die Fahrwerksteuereinrichtung 30 einen solchen Ausfall kompensieren.

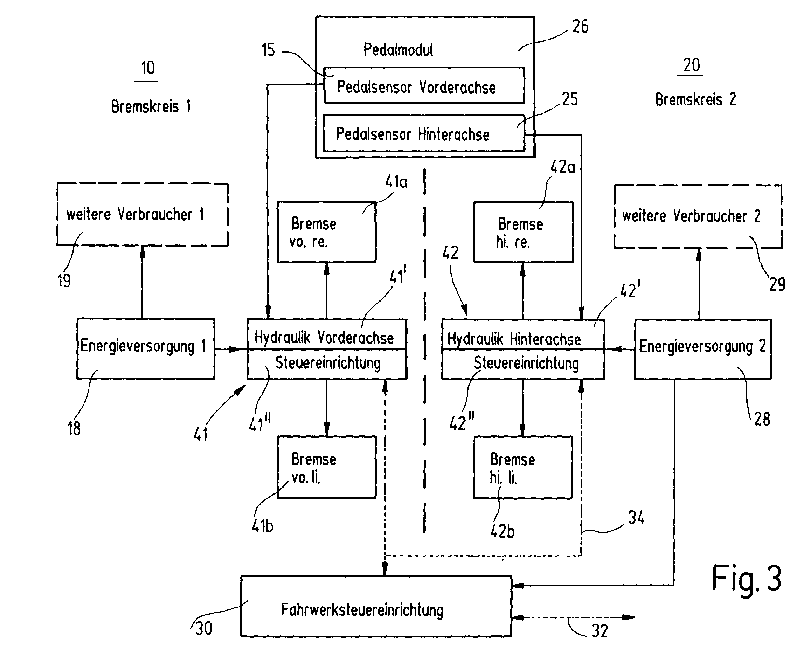

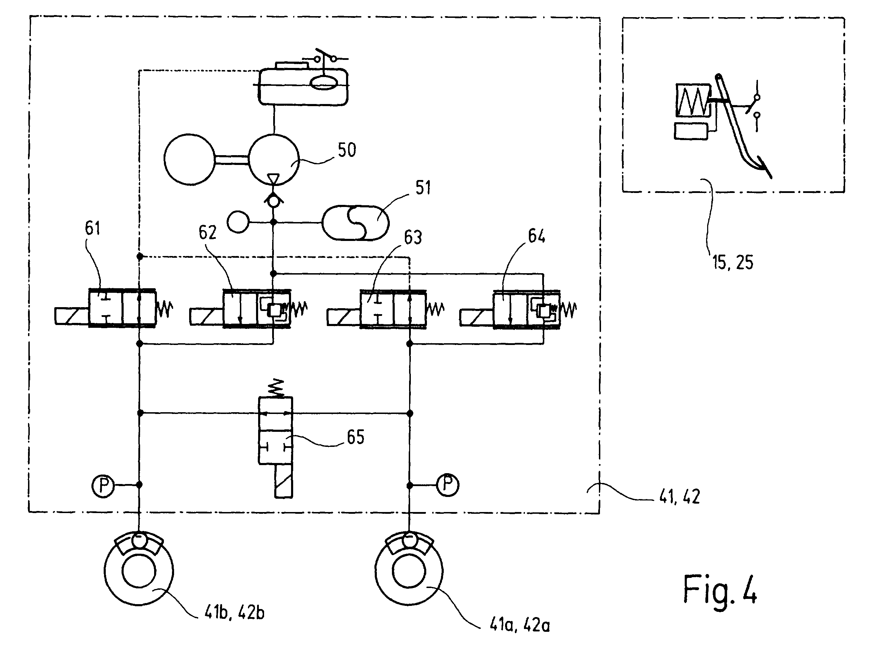

Bei einem weiteren, dritten Ausführungsbeispiel, dargestellt in Fig. 3 und Fig. 4, sind diejenigen Elemente, die mit denen des ersten und zweiten identisch sind, mit denselben Bezugszeichen versehen, so daß bezüglich deren Beschreibung auf die obigen Ausführungen vollinhaltlich Bezug genommen wird.

Im Gegensatz zu den in Fig. 1 und Fig. 2 dargestellten beiden Ausführungsbeispielen, ist bei dem in Fig. 3 dargestellten Ausführungsbeispiel in jedem der beiden Bremskreise 10 bzw. 20 ein hydraulisches Aggregat 41, 42 vorgesehen, welches ein Steuergerät 41'' bzw. 42'' von diesem ansteuerbare und hydraulische Schaltelemente 41' bzw. 42' umfaßt. Jedes der beiden Hydraulikaggregate 41, 42 betätigt achsweise rechte und linke Bremsen 41a, 41b bzw. 42a, 42b.

In Fig. 4 ist ein hydraulisches Aggregat 41, 42 schematisch im Detail dargestellt. Das hydraulische Aggregat 41,42 umfaßt auf an sich bekannte Weise eine Pumpe 50, die über einen Druckspeicher 51 und über ansteuerbare Ventile 61, 62, 63, 64, 65 linke und rechte Radbremsen 41b, 42b bzw. 41a, 42a in Abhängigkeit von der Pedalstellung eines Bremspedals, welches durch die Pedalsensoren 15, 25 erfaßt wird, betätigt. Wie in Fig. 4 dargestellt ist, ist jedem der beiden Hydraulikaggregate 41, 42 ein Hydraulikflüssigkeitsbehälter 59 zugeordnet. Die Vorteile dieser Anordnung sind folgende:

Es kann jede Achse vormontiert und entlüftet an das Fahrzeugmontageband geliefert werden. Dies verkürzt die Montagezeit. Darüber hinaus werden auch die bei der Montage entstehenden Geräusche minimiert.

Aufgrund der dezentralen Anordnung der Hydraulikaggregate 41, 42 ergeben sich kurze Hydraulikleitungen zu den Radbremsen, was wiederum eine hohe Dynamik, eine gute Entlüftbarkeit und darüber hinaus auch weniger Hydraulikflüssigkeit erforderlich macht.

Dadurch, daß jedem Hydraulikaggregat 41, 42 ein Hydraulikflüssigkeitsbehälter zugeordnet ist, wird durch den Entfall einer Saug- und Rücklaufleitung ein gutes Ansaugverhalten auch bei tiefen Temperaturen, weniger Geräuschprobleme durch Saugpulsation der Pumpe und dergleichen ermöglicht. Durch die den beiden Bremskreisen 10 bzw. 20 zugeordnete Anordnung der beiden Hydraulikaggregate 41, 42 ergibt sich darüber hinaus auch eine einfachere Montage, eine erhöhte Sicherheit durch Wegfall des Hauptbremszylinders, insbesondere bei einem Fahrzeugcrash, ein Montagevorteil durch Entfall von Leitungen, ein Montagevorteil bei Rechts-/Linkslenkern und die Möglichkeit, ein offenes Bremssystem vorzusehen, bei welchem keine Dampfblasenbildung entsteht und welches hierdurch längere Wechselintervalle der Hydraulikflüssigkeit ermöglicht.

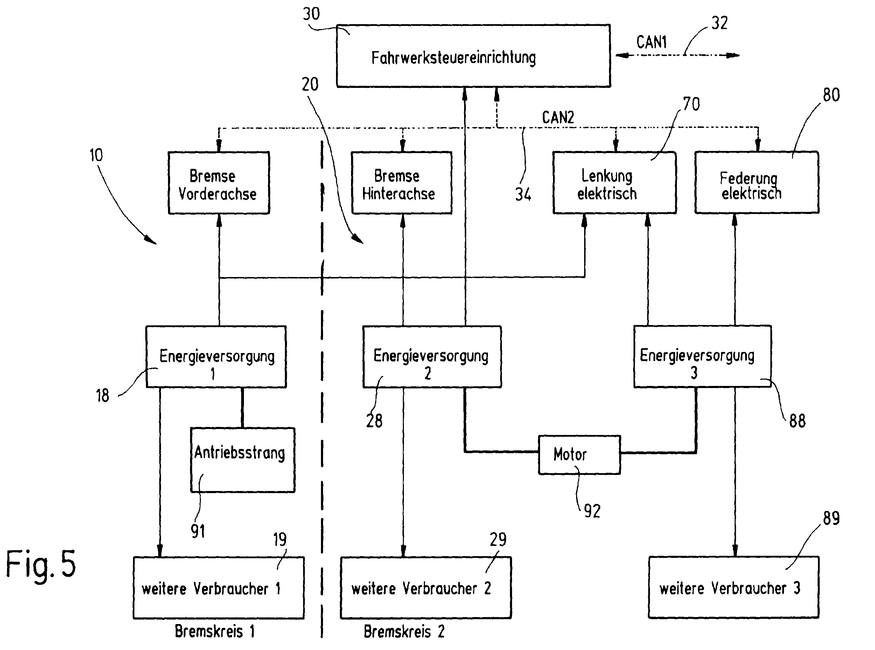

In Fig. 5 ist ein weiteres Ausführungsbeispiel einer Brems- und/oder Fahrwerkregelvorrichtung dargestellt, welche sich von den in Fig. 1 bis 4 dargestellten dadurch unterscheidet, daß neben den beiden Bremskreisen 10 bzw. 20 eine elektrische Lenkung 70 sowie eine elektrische Federung 80 vorgesehen sind. Die beiden Bremskreise 10 bzw. 20, die in Fig. 5 vereinfacht dargestellt sind (Bremse Vorderachse, Bremse Hinterachse), können den in Fig. 1 bis 4 dargestellten entsprechen. Wie aus Fig. 5 hervorgeht, weist die elektrische Lenkung und die elektrische Federung eine weitere, dritte Energieversorgung 88 auf, die von den oben beschriebenen Energieversorgungen 18, 28 unabhängig ist und weitere Verbraucher 89 mit Energie versorgen kann. Die Energieversorgung können beispielsweise Generatoren umfassen, deren erzeugte Energie in Akkumulatoren gespeichert wird, sie können darüber hinaus auch durch Brennstoffzellen oder dergleichen gebildet sein. Wie in Fig. 5 schematisch dargestellt ist, kann beispielsweise ein Generator der Energieversorgung 18 durch den Antriebsstrang 91 angetrieben werden, wohingegen die Generatoren der Energieversorgungen 28, 88 von der Brennkraftmaschine 92 des Fahrzeugs angetrieben werden können. Auf diese Weise wird eine Separierung der Antriebe erreicht, die insbesondere auch bei einem Ausfallen der Brennkraftmaschine 92 eine Versorgung mit Energie durch die Energieversorgung 18 über den Antriebsstrang sicherstellt.

## Patentansprüche

1. Brems- und/oder Fahrwerkregelvorrichtung für Fahrzeuge, umfassend eine Fahrwerksteuereinrichtung (30), durch welche abhängig von der von einem Pedalsensor erfaßten Bremspedalstellung Radbremsen des Fahrzeugs betätigbar sind, wobei wenigstens zwei Bremskreise (10 bzw. 20) vorgesehen sind, deren jeder wenigstens eine in Abhängigkeit vom Ausgangssignal der Fahrzeugsteuereinrichtung (30) ansteuerbare Steuereinrichtung (12, 22; 11a, 11b, 21a, 21b), wenigstens einen von der Steuereinrichtung (12, 22; 11a, 11b, 21a, 21b) ansteuerbaren Aktor zur Betätigung einer Radbremse und eine Energieversorgungseinrichtung (18, 28, 88) umfaßt, dadurch gekennzeichnet, daß jeder Bremskreis (10, 20) einen Pedalsensor aufweist.

2. Brems- und/oder Fahrwerkregelvorrichtung nach Anspruch 1, dadurch gekennzeichnet, daß jeder Bremskreis (10 bzw. 20) eine Steuereinrichtung (12, 22; 41'', 42'') umfaßt, durch die zwei Aktoren (13, 14, 23, 24; 61, 62, 63, 64) ansteuerbar sind.

3. Brems- und/oder Fahrwerkregelvorrichtung nach Anspruch 2, dadurch gekennzeichnet, daß jede Steuereinrichtung und die ihr zugeordneten Aktoren jeweils Teil eines Hydraulikaggregats (41, 42) mit einer Pumpe (50), einem Speicher (51) und ansteuerbaren Ventilen (61, 62, 63, 64) zur Betätigung der Radbremsen (41a, 41b, 42a, 42b) sind.

4. Brems- und/oder Fahrwerkregelvorrichtung nach Anspruch 1, dadurch gekennzeichnet, daß jeder Bremskreis (10 bzw. 20) zwei Steuereinrichtungen umfaßt, durch die jeweils ein Aktor (13, 14; 23, 24) ansteuerbar ist.

5. Brems- und/oder Fahrwerkregelvorrichtung nach Anspruch 4, dadurch gekennzeichnet, daß der Aktor (13, 14; 23, 24) die Radbremsen elektromotorisch betätigt.

6. Brems- und/oder Fahrwerkregelvorrichtung nach einem der Ansprüche 1 bis 5, dadurch gekennzeichnet, daß ferner eine von der Fahrwerksteuereinrichtung (30) ansteuerbare elektrische Lenkung und/oder eine elektrische Federung (80) vorgesehen sind, die von einer eigenen Energieversorgungseinrichtung (88) mit Energie versorgbar sind.

7. Brems- und/oder Fahrwerkregelvorrichtung nach einem der Ansprüche 1 bis 6, dadurch gekennzeichnet, daß jede Steuereinrichtung (12; 22) mit der Fahrwerksteuereinrichtung (30) über einen CAN-Datenbus (34) verbunden ist.
